# EUROPÄISCHE PATENTANMELDUNG

(11) **EP 3 869 652 A1**
(43) Veröffentlichungstag der Anmeldung: **25.08.2021**
(21) Anmeldenummer: 21154314.5
(22) Anmeldetag: 29.01.2021
(51) Int. Cl.: H02J 3/24, H02J 3/32, H02J 3/46, H02J 3/00

(54) **VERSORGUNG EINER INDUSTRIEANLAGE MIT ELEKTRISCHER ENERGIE**

(30) Priorität: 19.02.2020 DE 102020104390
(71) Anmelder: RWE Supply & Trading GmbH, 45141 Essen (DE)
(72) Erfinder: Meiners, Jan, 45141 Essen (DE); Dung Pham, Viet, 45141 Essen (DE); Schwarz, Hans-Günter, 45141 Essen (DE); Lazuk, Sergej, 45141 Essen (DE); Grandl, Maximilian, 45141 Essen (DE)
(74) Vertreter: Keenway Patentanwälte Neumann Heine Taruttis

(57) **Zusammenfassung**

Verfahren zur Versorgung einer Industrieanlage (1) mit elektrischer Energie (2), wobei der Industrieanlage (1) aus einem externen Stromnetz (3) elektrische Energie zugeführt wird, und wobei die Industrieanlage (1) eine Mehrzahl von Einrichtungen (4) zur Reduzierung des Bedarfs der Industrieanlage (1) an zugeführter elektrischer Energie (2) aus dem externen Stromnetz (3) aufweist, wobei das Verfahren umfasst:
a) Empfangen von jeweiligen Zustandssignalen (5) der Mehrzahl der Einrichtungen (4),
b) Erstellen einer Prognose eines zukünftigen Bedarfs der Industrieanlage (1) an elektrischer Energie (2),
c) Aussenden von Steuersignalen (6) an die Mehrzahl der Einrichtungen (4) anhand der in Schritt a) empfangenen Zustandssignale (5) und anhand der in Schritt b) erstellten Prognose.

Die Industrieanlage (1) kann derart mit elektrischer Energie (2) versorgt werden, dass Schwankungen in der Entnahme elektrischer Energie (2) aus dem externen Stromnetz (3) vermieden werden. Dadurch können Kosten reduziert und die Zuverlässigkeit der Industrieanlage (1) und des externen Stromnetzes (3) gesteigert werden.

## Beschreibung

Die Erfindung betrifft ein Verfahren und eine Vorrichtung zur Versorgung einer Industrieanlage mit elektrischer Energie.

Über das öffentliche Stromnetz sind Kraftwerke mit einer Vielzahl von Verbrauchern verbunden. Schwankungen im Bedarf der Verbraucher an elektrischer Energie und in der Erzeugungsleistung der Kraftwerke sind vom Stromnetz auszugleichen. Das wird durch die fortschreitende Verbreitung erneuerbarer Energien erschwert. So steigt einerseits die Zahl der Punkte, an denen elektrische Energie in das Stromnetz eingespeist wird. Andererseits unterliegt insbesondere die Einspeisung erneuerbarer Energien in das Stromnetz erheblichen Schwankungen. Große Schwankungen sind bei der Steuerung eines Stromnetzes von Nachteil. Darüber hinaus muss die in das Stromnetz eingespeiste elektrische Energie eine stark schwankende Nachfrage befriedigen.

Es ist daher erstrebenswert, Schwankungen im Bedarf der Verbraucher zu reduzieren. Dies gilt insbesondere für große Industrieanlagen mit einem großen Bedarf an elektrischer Energie. Netzdienlich sind vor allem Verbraucher mit einem hohen Stromverbrauch und einer kontinuierlichen Abnahme. Allerdings können nur wenige Verbraucher ihren Strombedarf effizient kontinuierlich halten.

Aufgabe der Erfindung ist es, eine Industrieanlage derart mit elektrischer Energie zu versorgen, dass elektrische Energie mit besonders geringen Schwankungen aus einem externen Stromnetz entnommen wird.

Diese Aufgabe wird gelöst mit dem Verfahren, der Steuereinheit und der Industrieanlage gemäß den unabhängigen Ansprüchen. Weitere vorteilhafte Ausgestaltungen sind in den abhängigen Ansprüchen angegeben. Die in den Ansprüchen und in der Beschreibung dargestellten Merkmale sind in beliebiger, technologisch sinnvoller Weise miteinander kombinierbar.

Erfindungsgemäß wird ein Verfahren zur Versorgung einer Industrieanlage mit elektrischer Energie vorgestellt. Der Industrieanlage wird aus einem externen Stromnetz elektrische Energie zugeführt. Die Industrieanlage weist eine Mehrzahl von Einrichtungen zur Reduzierung des Bedarfs der Industrieanlage an zugeführter elektrischer Energie aus dem externen Stromnetz auf. Das Verfahren umfasst:
a) Empfangen von jeweiligen Zustandssignalen der Mehrzahl der Einrichtungen,
b) Erstellen einer Prognose eines zukünftigen Bedarfs der Industrieanlage an elektrischer Energie,
c) Aussenden von Steuersignalen an die Mehrzahl der Einrichtungen anhand der in Schritt a) empfangenen Zustandssignale und anhand der in Schritt b) erstellten Prognose.

Unter einer Industrieanlage kann insbesondere ein industrieller Betrieb, eine Fabrik, ein Werk oder eine Produktionsstätte verstanden werden. Beispielsweise kann die Industrieanlage ein Werk der Automobilindustrie, ein Stahlwerk oder ein Betrieb der chemischen Industrie sein. Auch kann die Industrieanlage Teil eines Werks sein. Die Industrieanlage kann eine Vielzahl elektrischer Verbraucher aufweisen, die über ein betriebseigenes Netz mit elektrischer Energie versorgt werden können. Dieses Netz kann auch als Werksnetz bezeichnet werden.

Die Industrieanlage kann insbesondere über das externe Stromnetz mit elektrischer Energie versorgt werden. Dazu kann die elektrische Energie aus dem externen Stromnetz in das Werksnetz eingespeist werden und über dieses innerhalb der Industrieanlage verteilt werden. Das externe Stromnetz ist extern, weil es nicht Teil der Industrieanlage ist. Bei dem externen Stromnetz handelt es sich um das umgangssprachlich einfach als "Stromnetz" bezeichnete Netzwerk, über das Kraftwerke mit einer Vielzahl von Verbrauchern verbunden sind. Das externe Stromnetz kann auch als öffentliches Stromnetz bezeichnet werden, weil es Teil der Infrastruktur eines Landes ist. Das externe Stromnetz kann ein Übertragungsnetz und ein Verteilnetz umfassen. Das Übertragungsnetz wird mit Höchstspannung betrieben, das Verteilnetz mit Hochspannung, Mittelspannung und/oder Niederspannung. Vorzugsweise wird der Industrieanlage über Hochspannung elektrische Energie zugeführt. In dem Fall wird das Verfahren auf Industrieanlagen angewendet, die aufgrund ihres besonders großen Stromverbrauchs unmittelbar an Hochspannung angebunden sind.

Mit dem Verfahren können Schwankungen im Bedarf der Industrieanlage an elektrischer Energie aus dem externen Stromnetz reduziert werden. Dadurch kann die sogenannte Bilanzkreistreue gesteigert werden. Das erleichtert zum einen die Steuerung des externen Stromnetzes. Zum anderen kann das Verfahren dazu beitragen, den Bedarf eines Ausbaus des externen Stromnetzes zu reduzieren. Darüber hinaus können Letztverbraucher durch das Verfahren flexibler behandelt werden, so dass elektrische Energie aus erneuerbaren Energien effizienter in das externe Stromnetz eingeleitet werden kann. Weiterhin muss durch die reduzierten Schwankungen weniger Leistung bereitgestellt werden, wodurch Kosten eingespart werden und die Umwelt geschont wird.

Zur Reduzierung der Schwankungen weist die Industrieanlage die Mehrzahl der Einrichtungen zur Reduzierung des Bedarfs der Industrieanlage an zugeführter elektrischer Energie aus dem externen Stromnetz auf.

Die Einrichtungen können beispielsweise selbst elektrische Energie zur Verfügung stellen, so dass entsprechend weniger elektrische Energie aus dem externen Stromnetz entnommen werden muss. Dazu ist es nicht erforderlich, dass die Einrichtungen den gesamten Bedarf der Industrieanlage an elektrischer Energie abdecken können. Es genügt beispielsweise, dass die Einrichtungen 10 bis 30 % eines Maximalbedarfs der Industrieanlage an elektrischer Energie abdecken können. Die Grundversorgung kann dauerhaft durch das externe Stromnetz erfolgen. Es ist sogar bevorzugt, dass zu jedem Zeitpunkt mindestens 80 % des Bedarfs der Industrieanlage an elektrischer Energie durch das externe Stromnetz abgedeckt wird. Eine darüber hinausgehende Versorgung der Industrieanlage mit elektrischer Energie durch die Einrichtungen könnte unwirtschaftlich sein.

Alternativ oder zusätzlich können die Einrichtungen ausgebildet sein, den Bedarf der Industrieanlage an elektrischer Energie insgesamt zu reduzieren. Dazu können die Einrichtungen beispielsweise eingerichtet sein, um in die Steuerung der Industrieanlage einzugreifen.

Das beschriebene Verfahren bietet den Vorteil, dass bereits vorhandene Einrichtungen verwendet werden können. Durch eine verbesserte Steuerung können die insoweit bereits vorhandenen Werte eines Unternehmens besonders effizient genutzt werden.

Um Schwankungen im Bedarf der Industrieanlage an elektrischer Energie aus dem externen Stromnetz abzuschwächen, werden die Schritte a) bis c) durchgeführt.

In Schritt a) werden jeweilige Zustandssignale der Einrichtungen empfangen, vorzugsweise von einer Steuereinheit. Die Zustandssignale enthalten Angaben zum Zustand der jeweiligen Einrichtungen. Der Zustand einer Einrichtung kann Aufschluss darüber geben, wann und in welchem Umfang die Entnahme elektrischer Energie aus dem externen Stromnetz durch diese reduziert werden kann. Beispielsweise ist der Ladezustand eines Speichers ein solcher Zustand einer Einrichtung.

Als Zustand einer Einrichtung kommt insbesondere ein jeweils aktueller Zustand in Betracht. Dieser kann beispielsweise durch Messung ermittelt und unmittelbar verwendet werden. Alternativ oder zusätzlich kann auch ein jeweiliger historischer und/oder prognostizierter Zustand einer Einrichtung als Zustand verwendet werden. So kann beispielsweise eine geplante Wartung einer Einrichtung berücksichtigt werden.

In Schritt b) wird eine Prognose des zukünftigen Bedarfs der Industrieanlage an elektrischer Energie ermittelt. Das kann mittels eines Algorithmus erfolgen, der durch Erfahrung aufgestellt werden kann. Aus verschiedenen verfügbaren Werten und Informationen (Messwerte, Betriebszustände der Industrieanlage und Informationen der Produktionsplanung) kann so beispielsweise ein jeweiliger zu erwartender Bedarf der Industrieanlage an elektrischer Energie für eine Mehrzahl vorbestimmter zukünftiger Zeitabschnitte prognostiziert werden.

In Schritt c) werden Steuersignale an die Mehrzahl der Einrichtungen ausgesendet, vorzugsweise von der Steuereinheit. Die Steuersignale werden anhand der in Schritt a) empfangenen Zustandssignale und anhand der in Schritt b) erstellten Prognose erzeugt. Das bedeutet, dass die Einrichtungen über die Steuersignale anhand der in Schritt a) empfangenen Zustandssignale und anhand der in Schritt b) erstellten Prognose gesteuert werden. Lässt also die Prognose erkennen, dass mit einer Erhöhung des Bedarfs der Industrieanlage an elektrischer Energie zu rechnen ist, können beispielsweise - je nach Zustand der Einrichtungen - eine oder mehrere der Einrichtungen eingeschaltet werden. Das erfolgt vorzugsweise zu einem solchen Zeitpunkt, dass die Reduzierung des Bedarfs der Industrieanlage an elektrischer Energie zum prognostizierten Zeitpunkt der Erhöhung erfolgt. Je nach Art der Einrichtung kann es dazu genügen, die Einrichtung zum prognostizierten Zeitpunkt der Erhöhung einzuschalten oder die Einrichtung mit einem erforderlichen Vorlauf einzuschalten.

In dem beschriebenen Verfahren kommt eine Mehrzahl der Einrichtungen zum Einsatz. Dadurch können Schwächen einer Einrichtung durch Stärken einer anderen Einrichtung ausgeglichen werden. So können Schwankungen im Bedarf der Industrieanlage an elektrischer Energie aus dem externen Stromnetz besonders effizient reduziert werden.

Vorzugsweise werden in Schritt c) auch Wechselwirkungen der Einrichtungen untereinander berücksichtigt. Dadurch ist es möglich, beispielsweise zwei sich gegenseitig negativ beeinflussende Einrichtungen nicht zeitgleich zu betreiben. Sofern eine negative Beeinflussung nur unter bestimmten Umständen gegeben oder zumindest zu befürchten ist, kann auf den gemeinsamen Betrieb gezielt bei Vorliegen dieser Umstände verzichtet werden.

In einer bevorzugten Ausführungsform wird der Bedarf der Industrieanlage an zugeführter elektrischer Energie aus dem externen Stromnetz durch die Einrichtungen vergleichmäßigt.

Der Bedarf der Industrieanlage an elektrischer Energie kann vergleichmäßigt werden, indem einer prognostizierten Erhöhung des Bedarfs durch Einschalten der Einrichtungen entgegengewirkt wird und/oder indem einer prognostizierten Verringerung des Bedarfs durch Ausschalten der Einrichtungen entgegengewirkt wird.

Eine gleichmäßige Entnahme elektrischer Energie aus dem externen Stromnetz ist von Vorteil. So wird dadurch die Steuerung des externen Stromnetzes erleichtert. Damit zusammenhängend kann sich auch ein wirtschaftlicher Vorteil ergeben, weil viele Betreiber von Stromnetzen durch ihr Preismodell Anreize schaffen, die technisch nachteiligen Schwankungen zu reduzieren. Zudem gibt es gesetzliche Vorschriften, die auf die Reduzierung von Schwankungen abzielen.

In einer weiteren bevorzugten Ausführungsform ist mindestens eine der Einrichtungen ein Speicher, ein Generator oder eine Demand-Side-Management-Einrichtung.

Mit einem Speicher kann elektrische Energie zur Verfügung gestellt werden, so dass insoweit zeitweise weniger elektrische Energie aus dem externen Stromnetz entnommen werden muss. Als Speicher ist ein Batteriespeicher bevorzugt. Speicher haben den Vorteil, dass diese elektrische Energie schnell bereitstellen können. Nachteilig ist aber, dass die Speicherkapazität eines Speichers begrenzt ist und dass ein Speicher nicht beliebig oft wiederaufladbar und vergleichsweise teuer in der Anschaffung ist.

Auch mit einem Generator kann elektrische Energie zur Verfügung gestellt werden. Ein Generator hat den Vorteil, dass dieser elektrische Energie so lange zur Verfügung stellen kann, wie er beispielsweise mit Treibstoff versorgt wird - prinzipiell also unbegrenzt lange. Nachteilig ist aber, dass mit einem Generator nur vergleichsweise langsam auf Veränderungen reagiert werden kann. Zudem sind Generatoren oft sowohl in der Anschaffung als auch im Betrieb vergleichsweise teuer. Als Generator ist ein Gasmotor bevorzugt. Insbesondere mit einem solchen kann zuverlässig und konstant elektrische Energie erzeugt werden.

Eine Demand-Side-Management-Einrichtung ist eine Einrichtung, mit der die Industrieanlage nach dem Konzept des Demand-Side-Managements, auch "Laststeuerung" genannt, beeinflusst werden kann. Nach diesem Konzept wird der Bedarf der Industrieanlage an elektrischer Energie beeinflusst. Im Gegensatz zum Einsatz eines Speichers oder eines Generators ist dieses Konzept also nicht darauf gerichtet, einen Bedarf an elektrischer Energie aus dem externen Stromnetz abzudecken. Stattdessen wird der Bedarf der Industrieanlage an elektrischer Energie hinsichtlich des zeitlichen Anfalles verändert. Dazu kann beispielsweise ein elektrischer Verbraucher vorübergehend abgeschaltet oder seine Leistungsaufnahme durch eine Verlangsamung des Produktionsprozesses reduziert werden, um eine prognostizierte Erhöhung des Bedarfs der Industrieanlage an elektrischer Energie zu verhindern. Vorzugsweise werden nur vorher ausgewählte und geeignete elektrische Verbraucher abgeschaltet beziehungsweise reduziert. Wird beispielsweise eine energieintensive elektrische Heizung vorübergehend ausgeschaltet, hat dies keine signifikanten negativen Auswirkungen. Beispielsweise ein Server wird hingegen vorzugsweise nicht abgeschaltet. Das Demand-Side-Management hat den Vorteil, dass mit diesem schnell auf Veränderungen reagiert werden kann. Zudem erfordert dieses Konzept mit Ausnahme einer Steuerung keine eigenen Bauteile wie einen Speicher oder einen Generator. Insoweit ist dieses Konzept hinsichtlich der Anschaffungs- und Errichtungskosten besonders kostengünstig. Das Demand-Side-Management kann aber auch - je nach Komplexität der Industrieanlage - aufwendig und hinsichtlich der operativen Kosten, beispielsweise durch Produktionsausfall, entsprechend teuer sein.

Das Demand-Side-Management ist ein abstraktes Steuerungskonzept, welches durch verschiedenste Hardware umgesetzt werden kann. Diese Hardware wird hier zusammenfassend als Demand-Side-Management-Einrichtung bezeichnet. Sie kann Teil der Steuereinheit, Teil der elektrischen Verbraucher und/oder als eine eigenständige Einheit ausgebildet sein. Insbesondere kann diese Hardware ganz oder teilweise über die Steuereinheit und die elektrischen Verbraucher der Industrieanlage verteilt sein.

Es ist bevorzugt, dass die bei dem beschriebenen Verfahren eingesetzten Einrichtungen verschiedene Typen von Einrichtungen sind. Speicher, Generator und Demand-Side-Management-Einrichtung sind drei Beispiele solcher Typen. Besonders bevorzugt ist es, dass ein Generator, ein Speicher und eine Demand-Side-Management-Einrichtung eingesetzt werden. Durch die Kombination von verschiedenen Typen von Einrichtungen kann zum einen auf die individuellen Anforderungen des Lastprofils einer Industrieanlage bestmöglich eingegangen werden. Zum anderen können die Nachteile eines Typs durch die Vorteile eines anderen Typs ausgeglichen werden. Dadurch können Schwankungen im Bedarf der Industrieanlage an elektrischer Energie aus dem externen Stromnetz besonders effizient reduziert werden.

Alternativ oder zusätzlich zu den genannten Einrichtungen können auch Power-to-Heat-Einrichtungen und/oder Power-to-H2-Einrichtungen als Einrichtungen eingesetzt werden. Der Einsatz einer Power-to-Heat-Einrichtung ist besonders dann bevorzugt, wenn ein ausreichend hoher Bedarf an Wärme besteht.

Vorzugsweise werden die Steuersignale in Schritt c) derart ausgesendet, dass die Einrichtungen in folgender Reihenfolge berücksichtigt werden:
1) Lastreduktion durch die Demand-Side-Management-Einrichtung bei geringer Auslastung
2) Einspeisung elektrischer Energie aus dem Speicher
3) Einspeisung elektrischer Energie aus dem Generator
4) Lastreduktion durch Demand-Side-Management-Einrichtung auch bei hoher Auslastung

Bei 1) liegt grundsätzlich eine geringe Auslastung vor, beispielsweise über eine Zeitskala eines Tages. Dennoch kann es währenddessen kurzzeitig - beispielsweise innerhalb einer Viertelstunde - zu einem hohen Leistungsbedarf kommen, etwa weil viele elektrische Verbraucher gleichzeitig genutzt werden. In einem solchen Fall kann ohne Produktionsausfall durch die Entzerrung der Produktion ein geringerer Leistungswert erhalten werden.

Bei 4) ist die Auslastung den gesamten Tag über hoch, so dass auch in den meisten Viertelstunden eine hohe Auslastung vorliegt. In einem solchen Fall kann Demand-Side-Management auch nachteilig sein. Demand-Side-Management ist daher in einem solchen Fall nur die Ultima Ratio und wird als solche beispielsweise bei störungs- oder wartungsbedingten Ausfällen oder anderen unüblichen Situationen herangezogen.

In einer weiteren bevorzugten Ausführungsform wird die Prognose in Schritt b) anhand mindestens eines der folgenden Parameter erstellt:
- ein aktueller Bedarf der Industrieanlage an elektrischer Energie,
- eine historische Entwicklung des Bedarfs der Industrieanlage an elektrischer Energie,
- ein jeweiliger aktueller Zustand elektrischer Verbraucher der Industrieanlage,
- ein aktueller Betriebszustand der Industrieanlage,
- ein geplanter zukünftiger Betriebszustand der Industrieanlage.

Zur Berücksichtigung der genannten Parameter ist es bevorzugt, dass die Steuereinheit entsprechende Signale empfängt, beispielsweise von einem Stromzähler und/oder von einer Schaltanlage. Dies kann insbesondere in Schritt a) erfolgen.

Ein aktueller Bedarf der Industrieanlage an elektrischer Energie kann durch Messung ermittelt werden, beispielsweise unmittelbar an den elektrischen Verbrauchern. Vorzugsweise wird die Summe aller elektrischen Verbraucher berücksichtigt. Die Messungen erfolgen vorzugsweise in Echtzeit, beispielsweise mit einer Taktung von 15 Sekunden. Der aktuelle Bedarf der Industrieanlage an elektrischer Energie ist der beste Ausgangspunkt für die Prognose.

Können an der historischen Entwicklung des Bedarfs der Industrieanlage an elektrischer Energie Muster erkannt werden, werden diese vorzugsweise bei der Prognose berücksichtigt.

Als aktueller Zustand eines elektrischen Verbrauchers der Industrieanlage kommt beispielsweise der Zustand einer Produktionsmaschine in Betracht. Dieser kann beispielsweise einen Prozesszustand, eine Produktionsgeschwindigkeit und/oder Materialdaten umfassen. Entsprechendes gilt für den aktuellen Betriebszustand der Industrieanlage.

Ein geplanter zukünftiger Betriebszustand der Industrieanlage kann sich aus der Produktionsplanung ergeben. Ist beispielsweise geplant, die Produktion zu einem bestimmten Zeitpunkt zu steigern, ist zu diesem Zeitpunkt mit einem erhöhten Bedarf an elektrischer Energie zu rechnen. Auch das geplante Ein- und Ausschalten von Maschinen kann so berücksichtigt werden. Insbesondere bei Maschinen mit bekanntem, konstantem Stromverbrauch ist so eine genaue Prognose über den Bedarf an elektrischer Energie möglich.

In einer weiteren bevorzugten Ausführungsform wird in Schritt b) eine Wahrscheinlichkeit bestimmt, mit der der Bedarf der Industrieanlage an elektrischer Energie in einem bestimmten zukünftigen Zeitabschnitt einen vorgegebenen Wert überschreiten wird, wobei die Einrichtungen in Schritt c) für den bestimmten Zeitabschnitt in Abhängigkeit der so bestimmten Wahrscheinlichkeit eingesetzt werden.

Die Wahrscheinlichkeit kann anhand von Erfahrungswerten bestimmt werden. So kann beispielsweise ein Algorithmus erstellt werden, indem die historischen Veränderungen des Bedarfs analysiert werden. Dabei werden vorzugsweise auch Ereignisse berücksichtigt wie das Ein- und Ausschalten einer Maschine.

Es wird bestimmt, wie wahrscheinlich der Bedarf der Industrieanlage an elektrischer Energie in einem bestimmten zukünftigen Zeitabschnitt einen vorgegebenen Wert überschreiten wird. Beispielsweise kann die Zukunft in 15-Minuten-Zeitabschnitte unterteilt werden. Für jeden dieser Zeitabschnitte kann ein jeweiliger Wahrscheinlichkeits-Wert angegeben werden. Für jeden dieser Zeitabschnitte kann einzeln anhand der entsprechenden Wahrscheinlichkeit entschieden werden, ob und wie die Einrichtungen in Schritt c) eingesetzt werden. So können die Einrichtungen beispielsweise für alle Zeitabschnitte eingeschaltet werden, für die die entsprechende Wahrscheinlichkeit größer als ein vorgegebener Grenzwert ist. Der Grenzwert kann beispielsweise fix zu 70 % festgelegt sein. Alternativ kann der Grenzwert in Abhängigkeit der in Schritt a) empfangenen Zustandssignale dynamisch festgelegt werden. Ist beispielsweise ein Speicher fast leer, ist es so möglich, diesen gezielt nur für Zeitabschnitte einzusetzen, in denen mit besonders großer Wahrscheinlichkeit mit einer Überschreitung des vorgegebenen Wertes für den Bedarf der Industrieanlage an elektrischer Energie gerechnet wird.

In einer weiteren bevorzugten Ausführungsform werden die Schritte a) bis c) mit einer Steuereinheit durchgeführt, die redundante CPUs aufweist.

In dieser Ausgestaltung ist die Steuereinheit besonders ausfallsicher. Aufgrund der Tatsache, dass auch eine Mehrzahl der Einrichtungen verwendet wird, ist auch hinsichtlich der Einrichtungen eine Redundanz gegeben.

In einer weiteren bevorzugten Ausführungsform werden die Zustandssignale in Schritt a) von einem jeweiligen CPU der Einrichtungen ausgesendet und/oder die Steuersignale in Schritt c) an einen jeweiligen CPU der Einrichtungen ausgesendet.

Bevorzugt ist, dass die Zustandssignale in Schritt a) von einem jeweiligen CPU der Einrichtungen ausgesendet werden und die Steuersignale in Schritt c) an einen jeweiligen CPU der Einrichtungen ausgesendet werden. Durch die unmittelbare Kommunikation der Steuereinheit mit den jeweiligen CPUs der Einrichtungen kann die Steuerung mit einem autarken und dezentralen IT- und Kommunikationskonzept erfolgen.

Als ein weiterer Aspekt der Erfindung wird eine Steuereinheit vorgestellt, die zur Durchführung des beschriebenen Verfahrens bestimmt und eingerichtet ist.

Die beschriebenen Vorteile und Merkmale des Verfahrens sind auf die Steuereinheit anwendbar und übertragbar, und umgekehrt. Das Verfahren wird vorzugsweise unter Verwendung der Steuereinheit durchgeführt, wobei durch die Steuereinheit insbesondere die Schritte a) bis c) durchgeführt werden.

Als ein weiterer Aspekt der Erfindung wird eine Industrieanlage vorgestellt, die umfasst:
- einen Anschluss für ein externes Stromnetz zur Zuführung elektrischer Energie aus dem externen Stromnetz an die Industrieanlage,
- eine Mehrzahl von Einrichtungen zur Reduzierung des Bedarfs der Industrieanlage an zugeführter elektrischer Energie aus dem externen Stromnetz,
- eine Steuereinheit, die zur Durchführung des beschriebenen Verfahrens bestimmt und eingerichtet ist.

Die beschriebenen Vorteile und Merkmale des Verfahrens sind auf die Industrieanlage anwendbar und übertragbar, und umgekehrt. Das Verfahren wird vorzugsweise für die Industrieanlage durchgeführt.

Die Erfindung wird nachfolgend anhand der Figur näher erläutert. Die Figur zeigt ein besonders bevorzugtes Ausführungsbeispiel, auf das die Erfindung jedoch nicht begrenzt ist. Die Figur und die darin dargestellten Größenverhältnisse sind nur schematisch. Es zeigt:

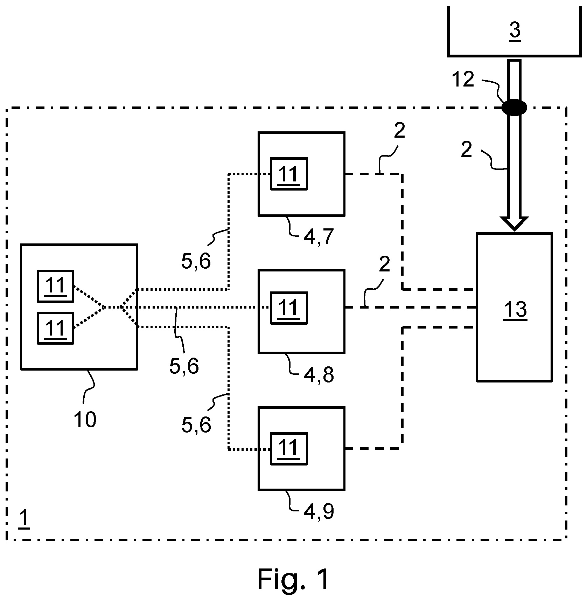

- Fig. 1:: eine schematische Veranschaulichung einer erfindungsgemäßen Industrieanlage.

Fig. 1 zeigt eine Industrieanlage 1, die mehrere elektrische Verbraucher umfasst. Diese sind zusammengefasst schematisch mit dem Bezugszeichen 13 gekennzeichnet. Die elektrischen Verbraucher 13 werden insbesondere über ein (nur angedeutetes) externes Stromnetz 3 mit elektrischer Energie 2 versorgt. Dafür weist die Industrieanlage 1 einen Anschluss 12 auf. Das externe Stromnetz 3 ist nicht Teil der Industrieanlage 1. Die Versorgung der elektrischen Verbraucher 13 mit elektrischer Energie 2 kann vollständig über das externe Stromnetz 3 erfolgen. Mit dem beschriebenen Verfahren kann die Entnahme elektrischer Energie 2 aus dem externen Stromnetz 3 vergleichmäßigt werden. Dazu weist die Industrieanlage 1 einen Speicher 7, einen Generator 8 und eine Demand-Side-Management-Einrichtung 9 als Einrichtungen 4 zur Reduzierung des Bedarfs der Industrieanlage 1 an zugeführter elektrischer Energie 2 aus dem externen Stromnetz 3 auf. Die Einrichtungen 4 sind jeweils mit den elektrischen Verbrauchern 13 verbunden. Das kann beispielsweise im Falle des Speichers 7 und des Generators 8 insoweit der Fall sein, als dass den elektrischen Verbrauchern 13 elektrische Energie 2 zugeführt wird, die im Speicher 7 gespeichert war oder die vom Generator 8 generiert wird. Dadurch muss weniger elektrische Energie 2 aus dem Stromnetz 3 entnommen werden, ohne den Verbrauch der elektrischen Verbraucher 13 zu reduzieren. Mit der Demand-Side-Management-Einrichtung 9 kann der Verbrauch der elektrischen Verbraucher 13 reduziert werden, wodurch ebenfalls weniger elektrische Energie 2 aus dem externen Stromnetz 3 entnommen werden muss. Insbesondere die Demand-Side-Management-Einrichtung 9 ist in Fig. 1 nur schematisch dargestellt. Das Demand-Side-Management ist ein abstraktes Steuerungskonzept, welches hier beispielsweise durch eine Demand-Side-Management-Einrichtung 9 umgesetzt wird.

Die Einrichtungen 4 werden durch eine Steuereinheit 10 gesteuert. Diese empfängt jeweilige Zustandssignale 5 der Einrichtungen 4 und erstellt eine Prognose eines zukünftigen Bedarfs der Industrieanlage 1 an elektrischer Energie 2. Anhand der empfangenen Zustandssignale 5 und anhand der erstellten Prognose sendet die Steuereinheit 10 Steuersignalen 6 an die Einrichtungen 4 aus. Dies erfolgt derart, dass die aus dem externen Stromnetz 3 entnommene elektrische Energie 2 durch die Einrichtungen 4 vergleichmäßigt wird.

Die Steuereinheit 10 weist redundante CPUs 11 auf. Diese sind mit jeweiligen CPUs 11 der Einrichtungen 4 verbunden. So können die Zustandssignale 5 von dem jeweiligen CPU 11 der Einrichtungen 4 an die CPUs 11 der Steuereinheit 10 ausgesendet werden. Zudem können die Steuersignale 6 von den CPUs 11 der Steuereinheit 10 an den jeweiligen CPU 11 der Einrichtungen 4 ausgesendet werden.

Die Industrieanlage 1 kann derart mit elektrischer Energie 2 versorgt werden, dass Schwankungen in der Entnahme elektrischer Energie 2 aus dem externen Stromnetz 3 vermieden werden. Dadurch können Kosten reduziert und die Zuverlässigkeit der Industrieanlage 1 und des externen Stromnetzes 3 gesteigert werden.

### Bezugszeichenliste

- 1: Industrieanlage
- 2: elektrische Energie
- 3: externes Stromnetz
- 4: Einrichtung
- 5: Zustandssignal
- 6: Steuersignal
- 7: Speicher
- 8: Generator
- 9: Demand-Side-Management-Einrichtung
- 10: Steuereinheit
- 11: CPU
- 12: Anschluss
- 13: elektrische Verbraucher

## Patentansprüche

1. Verfahren zur Versorgung einer Industrieanlage (1) mit elektrischer Energie (2), wobei der Industrieanlage (1) aus einem externen Stromnetz (3) elektrische Energie (2) zugeführt wird, und wobei die Industrieanlage (1) eine Mehrzahl von Einrichtungen (4) zur Reduzierung des Bedarfs der Industrieanlage (1) an zugeführter elektrischer Energie (2) aus dem externen Stromnetz (3) aufweist, wobei das Verfahren umfasst:
a) Empfangen von jeweiligen Zustandssignalen (5) der Mehrzahl der Einrichtungen (4),
b) Erstellen einer Prognose eines zukünftigen Bedarfs der Industrieanlage (1) an elektrischer Energie (2),
c) Aussenden von Steuersignalen (6) an die Mehrzahl der Einrichtungen (4) anhand der in Schritt a) empfangenen Zustandssignale (5) und anhand der in Schritt b) erstellten Prognose.

2. Verfahren nach Anspruch 1, wobei der Bedarf der Industrieanlage (1) an zugeführter elektrischer Energie (2) aus dem externen Stromnetz (3) durch die Einrichtungen (4) vergleichmäßigt wird.

3. Verfahren nach einem der vorstehenden Ansprüche, wobei mindestens eine der Einrichtungen (4) ein Speicher (7), ein Generator (8) oder eine Demand-Side-Management-Einrichtung (9) ist.

4. Verfahren nach einem der vorstehenden Ansprüche, wobei die Prognose in Schritt b) anhand mindestens eines der folgenden Parameter erstellt wird:
- ein aktueller Bedarf der Industrieanlage (1) an elektrischer Energie (2),
- eine historische Entwicklung des Bedarfs der Industrieanlage (1) an elektrischer Energie (2),
- ein jeweiliger aktueller Zustand elektrischer Verbraucher (13) der Industrieanlage (1),
- ein aktueller Betriebszustand der Industrieanlage (1),
- ein geplanter zukünftiger Betriebszustand der Industrieanlage (1).

5. Verfahren nach einem der vorstehenden Ansprüche, wobei in Schritt b) eine Wahrscheinlichkeit bestimmt wird, mit der der Bedarf der Industrieanlage (1) an elektrischer Energie (2) in einem bestimmten zukünftigen Zeitabschnitt einen vorgegebenen Wert überschreiten wird, und wobei die Einrichtungen (4) in Schritt c) für den bestimmten Zeitabschnitt in Abhängigkeit der so bestimmten Wahrscheinlichkeit eingesetzt werden.

6. Verfahren nach einem der vorstehenden Ansprüche, wobei die Schritte a) bis c) mit einer Steuereinheit (10) durchgeführt werden, die redundante CPUs (11) aufweist.

7. Verfahren nach einem der vorstehenden Ansprüche, wobei die Zustandssignale (5) in Schritt a) von einem jeweiligen CPU (11) der Einrichtungen (4) ausgesendet werden und/oder die Steuersignale (6) in Schritt c) an einen jeweiligen CPU (11) der Einrichtungen (4) ausgesendet werden.

8. Steuereinheit (10), die zur Durchführung eines Verfahrens nach einem der Ansprüche 1 bis 7 bestimmt und eingerichtet ist.

9. Industrieanlage (1) umfassend:
- einen Anschluss (12) für ein externes Stromnetz (3) zur Zuführung elektrischer Energie (2) aus dem externen Stromnetz (3) an die Industrieanlage (1),
- eine Mehrzahl von Einrichtungen (4) zur Reduzierung des Bedarfs der Industrieanlage (1) an zugeführter elektrischer Energie (2) aus dem externen Stromnetz (3),
- eine Steuereinheit (10), die zur Durchführung eines Verfahrens nach einem der Ansprüche 1 bis 7 bestimmt und eingerichtet ist.
